# FASCICULE DE BREVET EUROPEEN

(11) **EP 3 768 405 B1**
(45) Date de publication et mention de la délivrance du brevet: **21.12.2022**
(21) Numéro de dépôt: 18849443.9
(22) Date de dépôt: 21.12.2018
(51) Int. Cl.: B32B 18/00, C04B 35/117, B28B 1/24, C04B 35/80, C04B 35/14, C04B 35/18, C04B 35/447, C04B 35/488, C04B 35/56, C04B 35/58, F02K 1/82, B28B 19/00, G10K 11/168, C04B 38/00, B28B 23/00, B28B 7/36, F02C 7/045, B28B 7/46, B01D 29/82, C04B 35/185

(54) **PROCÉDÉ DE FABRICATION D'UNE PIÈCE EN MATÉRIAU COMPOSITE CÉRAMIQUE PAR INJECTION DE POUDRE DANS UN RENFORT FIBREUX AVEC DRAINAGE PAR STRATE DE FILTRATION COMPOSITE**
VERFAHREN ZUR HERSTELLUNG EINES TEILS AUS EINEM KERAMIKVERBUNDWERKSTOFF DURCH EINSPRITZEN VON PULVER IN EINE FASERVERSTÄRKUNG MIT ENTWÄSSERUNG DURCH EINE VERBUNDFILTERSCHICHT
METHOD FOR THE PRODUCTION OF A PART MADE FROM A CERAMIC MATRIX COMPOSITE MATERIAL, BY MEANS OF THE INJECTION OF POWDER INTO A FIBROUS REINFORCEMENT WITH DRAINAGE THROUGH A COMPOSITE FILTRATION LAYER

(30) Priorité: 28.12.2017 FR 1763335
(43) Date de publication de la demande: 27.01.2021
(73) Titulaire: Safran Ceramics, 33185 Le Haillan (FR)
(72) Inventeur: PHILIPPE, Eric, 77550 MOISSY-CRAMAYEL (FR); BOUNIA, Medhy Damien, 77550 MOISSY-CRAMAYEL (FR); CLERAMBOURG, Aurélia, 77550 MOISSY-CRAMAYEL (FR); CARMINATI, Paul, 33700 MERIGNAC (FR)
(74) Mandataire: Cabinet Beau de Loménie
(86) Numéro de dépôt international: PCT/FR2018/053527
(87) Numéro de publication internationale: WO 2019/129983

(56) Documents cités:
- EP-A1- 0 573 353
- WO-A1-2014/118216
- WO-A1-2016/102839
- WO-A1-2017/187050
- US-A1- 2014 272 274
- US-B1- 6 497 776
- P.O. GUGLIELMI ET AL: "Production of Oxide Ceramic Matrix Composites by a Prepreg Technique", MATERIALS SCIENCE FORUM, vol. 727-728, 1 août 2012 (2012-08-01), pages 556-561, XP055589660, DOI: 10.4028/www.scientific.net/MSF.727-728.556
- 3m: "3M(TM) Nextel(TM) Ceramic Structural Fabrics 610 and 720", , 1 juillet 2016 (2016-07-01), XP055589796, Extrait de l'Internet: URL:https://multimedia.3m.com/mws/media/12 56264O/3m-nextel-structural-rovings-and-fi bers-610-and-720.pdf [extrait le 2019-05-17]

## Description

### Arrière-plan de l'invention

La présente invention concerne un procédé de fabrication d'une pièce en matériau composite thermostructural notamment de type Oxyde/Oxyde ou à matrice céramique (CMC), c'est-à-dire comportant un renfort fibreux formé à partir de fibres en matériau céramique réfractaire densifié par une matrice également en matériau céramique réfractaire.

Les pièces en matériau composite Oxyde/Oxyde sont généralement élaborées par drapage dans un moule d'une pluralité de strates fibreuses réalisées à partir de fibres en oxyde réfractaire, les strates étant chacune préalablement imprégnées avec une barbotine chargée de particules d'oxyde réfractaire. L'ensemble des strates ainsi disposées est ensuite compacté à l'aide d'un contre-moule ou d'une bâche à vide et un passage en autoclave. La préforme chargée ainsi obtenue est alors soumise à un frittage ou un traitement thermique de céramisation afin de former une matrice en oxyde réfractaire dans la préforme et obtenir une pièce en matériau composite Oxyde/Oxyde. Cette technique peut être également utilisée pour réaliser des pièces en matériau composite à matrice céramique (CMC) base carbone. Dans ce cas, les strates fibreuses sont réalisées à partir de fibres de carbure de silicium (SiC) ou de carbone et sont imprégnées avec une barbotine chargée de particules de carbure (ex. SiC), de borure (ex. TiB₂), de siliciure (ex. MoSi₂) ou de nitrure (ex. Si₃N₄).

Une autre solution de fabrication de pièces en matériau composite Oxyde/Oxyde ou CMC par voie liquide comprend une étape d'imprégnation d'une texture fibreuse avec une barbotine chargée, par exemple de particules d'alumine dans le cas d'un matériau composite Oxyde/Oxyde ou de particules de carbure de silicium (SiC) dans le cas d'un matériau composite CMC. L'étape d'imprégnation est réalisée par injection sous pression d'une barbotine chargée au sein de la texture fibreuse (procédé STM pour « Slurry Tranfer Molding »). Dans un tel cas, il faut drainer ou filtrer la phase liquide de la barbotine afin d'obtenir un remplissage optimal des porosités résiduelles présentes dans la texture fibreuse avec les charges solides. Un tel procédé est notamment décrit dans les documents WO 2017/187050 et WO 2016/102839.
L'utilisation d'un élément filtrant interposé entre la texture fibreuse et la partie du moule par laquelle le solvant de la barbotine est évacué est, par conséquent, nécessaire. L'élément de filtration peut être constitué d'une pièce rigide en matériau poreux qui doit être détachée de la texture fibreuse lors du démoulage de celle-ci après injection de la barbotine chargée et filtration du solvant.

L'utilisation d'un tel élément filtrant peut poser des difficultés. En effet, son retrait de la texture fibreuse peut s'avérer délicat et entraîner une dégradation de la texture fibreuse injectée. En outre, dans le cas de textures fibreuses présentant une géométrie complexe, il peut être difficile de concevoir un élément de filtration qui s'adapte à la fois géométrie du moule et de la texture fibreuse.

### Objet et résumé de l'invention

La présente invention a pour but de remédier aux inconvénients précités et de proposer une solution qui permet de faciliter la réalisation des pièces en matériau à composite à matrice céramique (CMC), oxyde, carbure ou base carbone par injection d'une barbotine chargée dans une texture fibreuse.

A cet effet, l'invention propose un procédé de fabrication d'une pièce en matériau composite comprenant les étapes suivantes :
- formation d'une texture fibreuse à partir de fibres céramiques réfractaires,
- placement de la texture fibreuse dans un moule comportant au moins un port d'injection et au moins un port d'évacuation, une strate de filtration étant interposée entre la texture fibreuse et ledit au moins port d'évacuation, la strate de filtration comprenant une structure fibreuse partiellement densifiée,
- injection sous pression d'une barbotine contenant des particules céramiques réfractaires dans la texture fibreuse,
- drainage par la strate de filtration du solvant de la barbotine ayant traversé la texture fibreuse et rétention des particules céramiques réfractaires à l'intérieur de ladite texture par la strate de filtration de manière à obtenir une préforme fibreuse comprenant au moins la texture fibreuse chargée de particules céramiques réfractaires et la strate de filtration, le solvant étant évacué par ledit au moins port d'évacuation,
- traitement thermique des particules céramiques réfractaires présentes dans la texture fibreuse de la préforme afin de former une pièce en matériau composite comprenant au moins ladite texture fibreuse densifiée par une matrice céramique réfractaire et la strate de filtration.

Ainsi, grâce à l'utilisation d'une strate de filtration faisant partie intégrante de la pièce en matériau composite finale, on s'affranchit du problème du retrait d'un élément de filtration utilisé dans l'art antérieur. En outre, la strate de filtration n'étant pas rigide, elle peut se conformer suivant différents types de géométrie, ce qui facilite la réalisation de pièces en matériau composite de formes complexes.

Selon une caractéristique particulière du procédé de l'invention, la strate de filtration comprend des fibres céramiques réfractaires de même nature que les fibres céramiques réfractaires de la texture fibreuse, la strate de filtration étant partiellement densifiée avec des particules céramiques réfractaires pré-frittées de même nature que les particules céramiques réfractaires déposées dans la texture fibreuse

Selon une autre caractéristique particulière du procédé de l'invention, la strate de filtration présente une taille moyenne des pores comprise entre 0,1 µm et 20 µm avec un taux volumique moyen de porosité inférieur à 50%.

Selon une autre caractéristique particulière du procédé de l'invention, la texture fibreuse comprend une structure fibreuse obtenue par tissage bidimensionnel ou tissage tridimensionnel ou multicouche ou placement automatique de fibres unidirectionnelles.

Selon une autre caractéristique particulière du procédé de l'invention, la texture fibreuse correspond à une peau fibreuse placée en regard d'une face d'une structure alvéolaire ou aérée, la peau fibreuse et la structure alvéolaire étant placées dans le moule avec interposition de la strate de filtration entre ladite peau fibreuse et ladite structure alvéolaire, la pièce en matériau composite obtenue comprenant la peau fibreuse densifiée par une matrice céramique réfractaire, la strate de filtration et la structure alvéolaire.

Selon une autre caractéristique particulière du procédé de l'invention, la texture fibreuse correspond à une peau fibreuse placée en regard des faces d'une pluralité de structures alvéolaires, la peau fibreuse et les structures alvéolaires étant placées dans le moule avec interposition de la strate de filtration entre ladite peau fibreuse et lesdites structures alvéolaires, la pièce en matériau composite obtenue comprenant la peau fibreuse densifiée par une matrice céramique réfractaire, la strate de filtration et les structures alvéolaires.

Selon une autre caractéristique particulière du procédé de l'invention, le moule présente une géométrie de révolution annulaire ou tronconique, la texture fibreuse et la strate de filtration étant conformées suivant une géométrie de révolution annulaire ou tronconique lors de leur placement dans le moule. Dans ce cas, la pièce en matériau composite obtenue peut notamment constituer une pièce d'arrière-corps, une chambre de combustion ou un carter de moteur aéronautique.

Les fils de la préforme peuvent être des fils formés de fibres constituées d'un ou plusieurs des matériaux suivants : l'alumine, la mullite, la silice, un aluminosilicate, un borosilicate, du carbure de silicium et du carbone.

Les particules céramiques réfractaires peuvent être en un matériau choisi parmi : l'alumine, la mullite, la silice, un aluminosilicate, un aluminophosphate, la zircone, un carbure, un borure, un siliciure et un nitrure, ou un mélange de plusieurs de ces matériaux.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en perspective éclatée d'un outillage conformément à un mode de réalisation de l'invention,
- la figure 2 est une vue schématique en coupe montrant l'outillage de la figure 1 fermé avec une texture fibreuse et une strate de filtration positionnées dans celui-ci,
- la figure 3 est une vue schématique en coupe montrant les étapes d'imprégnation d'une texture fibreuse avec une barbotine chargée dans l'outillage de la figure 2 conformément à un mode de réalisation du procédé de l'invention,
- la figure 4 est une vue schématique en coupe montrant la texture fibreuse de la figure 3 une fois chargée avec des particules céramiques réfractaires,
- la figure 5 est une vue schématique en perspective éclatée d'un outillage conformément à autre un mode de réalisation de l'invention,
- la figure 6 est une vue schématique en coupe montrant l'outillage de la figure 5 fermé avec une peau fibreuse, une strate de filtration et une structure alvéolaire positionnées dans celui-ci,
- les figures 7A à 7C montrent la fabrication d'une structure fibreuse déployable destinée à former une structure alvéolaire;
- les figures 8A à 8C montrent la fabrication d'une autre structure fibreuse déployable destinée à former une structure alvéolaire;
- la figure 9 est une vue schématique en coupe montrant les étapes d'imprégnation d'une peau fibreuse avec une barbotine chargée dans l'outillage de la figure 6 conformément à un mode de réalisation du procédé de l'invention,
- la figure 10 est une vue schématique en coupe montrant la peau fibreuse de la figure 9 une fois chargée avec des particules céramiques réfractaires,
- la figure 11 est une vue schématique en perspective montrant la préforme obtenue.

### Description détaillée de modes de réalisation

Le procédé de fabrication d'une pièce en matériau composite notamment de type CMC conforme à la présente invention débute par la réalisation d'une texture fibreuse destinée à former le renfort de la pièce.

La texture fibreuse est réalisée de façon connue par tissage au moyen d'un métier à tisser de type jacquard sur lequel on a disposé un faisceau de fils de chaînes ou torons en une pluralité de couches, les fils de chaînes étant liés par des fils de trame ou inversement. La texture fibreuse peut être réalisée par empilement de strates ou plis obtenu par tissage bidimensionnel (2D). La texture fibreuse peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement. Le procédé de l'invention est particulièrement adapté pour permettre l'introduction d'une barbotine chargée dans des textures fibreuses 2D, à savoir des textures obtenues par empilement de strates ou plis 2D, d'épaisseur importante, c'est-à-dire des structures fibreuses 2D ayant une épaisseur d'au moins 0,5 mm, de préférence au moins 1 mm.

Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre-elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre-elles.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

Les textures 3D présentent une géométrie complexe dans laquelle il est difficile d'introduire et de répartir de manière homogène des particules solides en suspension. Le procédé de l'invention est également très bien adapté pour l'introduction d'une barbotine chargée dans des textures fibreuses tissées 3D.

La texture fibreuse peut être également réalisée à partir de couches ou nappes unidirectionnelles (UD) mise en forme comme décrit notamment dans le document US 9 102 571 ou US 2015/328799.

Les fils utilisés pour tisser la texture fibreuse destinée à former le renfort fibreux de la pièce en matériau composite peuvent être notamment formés de fibres céramiques réfractaires constituées d'un des matériaux suivants: l'alumine, la mullite, la silice, un aluminosilicate, un borosilicate, du carbure de silicium, du carbone ou d'un mélange de plusieurs de ces matériaux.

Une fois la texture fibreuse réalisée, celle-ci est placée dans un outillage comprenant une strate de filtration conforme à l'invention qui permet, comme expliqué ci-après, de densifier la texture fibreuse avec des particules céramiques réfractaires.

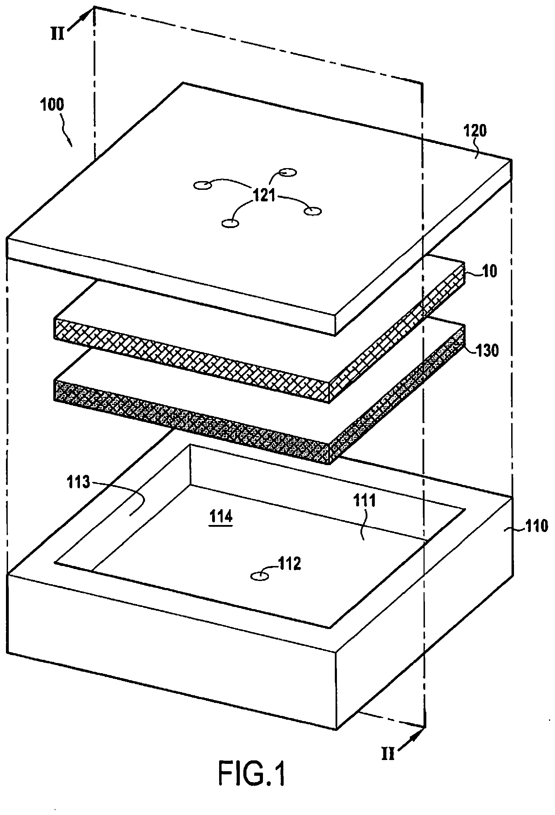

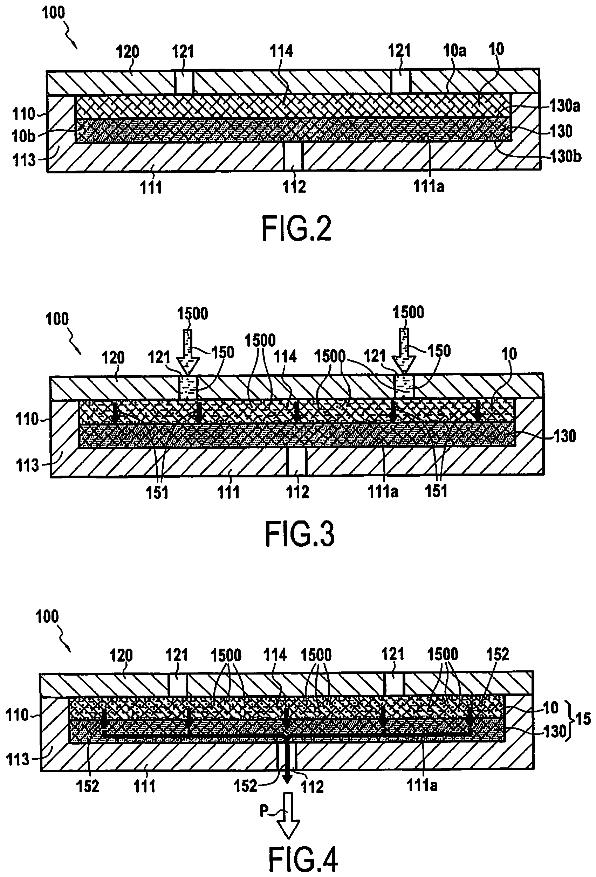

Selon un premier exemple illustré sur les figures 1 et 2, une texture fibreuse 10 est placée dans un outillage 100. Dans l'exemple décrit ici, la texture fibreuse 10 est réalisée suivant une des techniques définies ci-avant (empilement strates UD ou 2D ou tissage 3D) avec des fils d'alumine Nextel 610^{™}. La texture fibreuse 10 est ici destinée à former le renfort fibreux d'une pièce en matériau composite Oxyde/Oxyde.

L'outillage 100 comprend un moule 110 et un contre-moule 120. Le moule 110 comprend un fond 111 muni d'un évent 112. Le moule 110 comprend également une paroi latérale 113 qui forme avec le fond 111 une cavité de moulage 114. Dans l'exemple illustré, l'outillage 100 dans lequel la texture fibreuse 10 est présente est fermé dans sa partie inférieure par le moule 110 et est fermé dans sa partie supérieure par le contre-moule 120 formant un couvercle refermant l'outillage 100. Le moule 110 et le contre-moule 120 servent à dimensionner la préforme et donc la pièce à obtenir ainsi qu'à ajuster le taux de fibres dans la pièce à obtenir.

Le contre-moule 120 comporte une pluralité de ports d'injection 121 au travers desquels un liquide chargé de particules céramiques réfractaires est destiné à être injecté afin de pénétrer dans la porosité de la texture fibreuse 10 au travers de la première face 10a de la texture fibreuse 10. Dans l'exemple illustré aux figures 1 et 2, le liquide chargé est destiné à être injecté au travers d'une pluralité de ports d'injection 121 débouchant dans des zones différentes de la cavité de moulage. Toutefois, on ne sort pas du cadre de l'invention lorsque le liquide est injecté au travers d'un unique port d'injection.

Le moule 110 comporte, quant à lui, un unique évent d'évacuation 112 du liquide. Bien entendu, on ne sort pas du cadre de l'invention lorsqu'une pluralité d'évents de sortie est mise en œuvre.

Conformément à l'invention, une strate de filtration 130 est interposée entre la texture fibreuse 10 et le fond 111 du moule 110 comportant l'évent 112. La strate de filtration selon l'invention correspond à une structure fibreuse obtenue par dépose d'unidirectionnel (UD), tissage bidimensionnel (2D) ou tridimensionnel (3D) de fils de fibres céramiques réfractaires constituées d'au moins un des matériaux suivants: l'alumine, la mullite, la silice, un aluminosilicate, un borosilicate, du carbure de silicium, du carbone ou d'un mélange de plusieurs de ces matériaux. La strate de filtration est de préférence réalisée avec des fibres céramiques réfractaires de même nature que les fibres céramiques réfractaires de la texture fibreuse. La strate de filtration présente une épaisseur de préférence comprise entre 0,1 mm et 1 mm.

Dans l'exemple décrit ici, la strate de filtration 130 correspond à une couche de tissu 2D réalisée avec des fils de fibres des fils d'alumine Nextel 610^{™}.

La strate de filtration selon l'invention est partiellement densifiée afin de former dans la strate un réseau de porosité d'une taille déterminée permettant de laisser passer le filtrat de la barbotine, à savoir la phase liquide de celle-ci, tout en retenant les particules de céramiques réfractaires présentes dans la barbotine injectée.

A titre d'exemple, la strate de filtration, une fois partiellement densifiée peut présenter une taille moyenne des pores comprise entre 0,1 µm et 20 µm avec un taux volumique moyen de porosité inférieur à 50%.

La structure fibreuse destinée à former la strate de filtration peut être partiellement densifiée par plusieurs méthodes. La structure fibreuse peut être notamment pré-imprégnée ou infusée avec une barbotine chargée de particules réfractaires. Dans ce cas, le taux de densification et, par conséquent, le taux de porosité présent dans la strate de filtration après le pré-frittage des particules est ajusté en contrôlant la granulométrie, le taux de charge et le liant dans la barbotine. La strate de filtration peut en outre être obtenue en injectant une barbotine chargée de particules réfractaires dans la structure fibreuse, la quantité de particules initialement introduite pilotant l'épaisseur de calage et donc le taux volumique de matrice (Tvm) final. Les procédés d'enduction ou de trempé peuvent également être utilisés pour densifier partiellement la texture fibreuse destinée à former la strate de filtration.

Dans l'exemple décrit ici, la strate de filtration 130 est réalisée à partir d'un tissu 2D de fils d'alumine qui a été infusée avec une barbotine chargée à 25% en volume de particules d'alumine, les particules ayant été pré-frittées afin de densifier partiellement la strate de filtration.

La strate de filtration 130 permet le drainage du solvant de la barbotine à l'extérieur de la texture fibreuse 10 et son évacuation par l'évent de sortie 112 du fait de l'application d'un gradient de pression entre l'évent de sortie 112 et les ports d'injection 121.

Avant l'injection d'une barbotine dans la texture fibreuse 10, une pression de compaction permettant de compacter la texture fibreuse 10 entre le moule 110 et le contre-moule 120 peut être appliquée par serrage du moule ou au moyen d'une presse, cette pression de compaction pouvant être maintenue durant l'injection. La pression de compaction peut être également exercée par un liquide de compaction via une membrane comme dans le procédé Polyflex.

En variante, la pression de compaction peut être appliquée après le début de l'injection du liquide chargé et peut ensuite être maintenue. L'application d'une pression de compaction peut permettre de compacter la texture afin d'aider au drainage du liquide et d'atteindre une épaisseur cible pour la préforme fibreuse sans endommager celle-ci.

Dans l'exemple décrit ici, le liquide chargé correspond à une barbotine contenant des particules céramiques réfractaires. La figure 3 illustre la configuration obtenue durant l'injection d'une barbotine 150 et le drainage du milieu liquide de celle-ci. La barbotine 150 a été injectée sous pression par les ports d'injection 121 de manière à pénétrer dans la texture fibreuse 10 au travers de sa première face 10a. Les particules céramiques réfractaires 1500 présentes dans la barbotine 150 sont destinées à permettre la formation d'une matrice céramique réfractaire dans la porosité de la texture fibreuse 10. Cette matrice céramique réfractaire peut, dans un exemple de réalisation, être une matrice d'oxyde réfractaire.

La barbotine peut par exemple être une suspension d'une poudre d'alumine dans de l'eau. La dimension particulaire moyenne (D50) de la poudre d'alumine peut être comprise entre 0,1 µm et 2 µm. La poudre d'alumine utilisée peut être une poudre d'alumine alpha.

Plus généralement, la barbotine peut être une suspension comportant de particules céramiques réfractaires présentant une dimension particulaire moyenne comprise entre 0,1 µm et 10 µm. La teneur volumique en particules dans la barbotine peut, avant l'injection, être comprise entre 5% et 50%. Les particules céramiques réfractaires peuvent comporter un matériau choisi parmi : l'alumine, la mullite, la silice, un aluminosilicate, un aluminophosphate, la zircone, un carbure, un borure, un siliciure et un nitrure ou un précurseur d'un ou plusieurs de ces matériaux. En fonction de leur composition de base, les particules céramiques réfractaires peuvent, en outre, être mélangées avec des particules d'alumine, de zircone, d'aluminosilicate, d'un oxyde de terre rare, de silicate de terre rare (lequel peut par exemple être utilisé dans les barrières environnementales ou thermiques) ou toute autre charge permettant de fonctionnaliser la pièce en matériau composite à obtenir comme le noir de carbone, le graphite ou le carbure de silicium.

Le solvant de la barbotine peut, par exemple, comporter une phase aqueuse présentant un pH acide (i.e. un pH inférieur à 7) et/ou une phase alcoolique comportant par exemple de l'éthanol. La barbotine peut comporter un acidifiant tel que de l'acide nitrique et le pH du milieu liquide peut par exemple être compris entre 1 et 5. La barbotine peut, en outre, comporter un liant organique comme de l'alcool polyvinylique (PVA) lequel est notamment soluble dans l'eau.

Comme illustré sur la figure 3, les particules céramiques réfractaires 1500 sont présentes après injection de la barbotine 150 dans la porosité de la texture fibreuse 10. Les flèches 151 représentent le mouvement de la barbotine 150 injectée dans la texture fibreuse 10. Les flèches 152 représentent quant à elles le mouvement du milieu ou phase liquide de la barbotine drainé par la strate de filtration 130 comme illustré sur la figure 4.

Le contre-moule 120 exerce une pression sur la texture fibreuse 10 pendant et après l'étape d'injection.

Un pompage P peut, en outre, être réalisé au niveau de l'évent de sortie 112 durant le drainage, par exemple au moyen d'une pompe à vide primaire. La réalisation d'un tel pompage permet d'améliorer le drainage et de sécher plus rapidement la texture fibreuse.

Dans cette configuration, la strate de filtration 130 permet de retenir dans la texture fibreuse 10 les particules 1500 initialement présentes dans la barbotine et que tout ou partie de ces particules se déposent par filtration dans la texture fibreuse 10.

Une fois les étapes d'injection et de drainage effectuées, on obtient une préforme fibreuse 15 comprenant la texture fibreuse 10 chargée de particules céramiques réfractaires et la strate de filtration 130 qui est liée à la texture 10. L'adhésion entre la strate de filtration et la texture fibreuse est réalisée pendant l'injection. De la matière se dépose entre la strate de filtration et la texture fibreuse et, grâce à la compaction, l'ensemble est solidaire. Le traitement thermique de frittage crée ensuite des pontages entres les particules qui complète l'adhésion.

La préforme obtenue est ensuite séchée puis démoulée, la préforme pouvant conserver après démoulage la forme adoptée dans la cavité de moulage, par exemple sa forme adoptée après compaction entre le moule et le contre-moule grâce à la présence d'un liant dans la barbotine tel que du PVA.

La préforme est ensuite soumise à un traitement thermique, ici un frittage, par exemple sous air à une température comprise entre 1000°C et 1200°C afin de pré-fritter les particules céramiques réfractaires et ainsi former une matrice céramique réfractaire dans la porosité de la texture fibreuse et de la strate de filtration solidaire. On obtient alors une pièce en matériau composite, par exemple une pièce en matériau composite Oxyde/Oxyde, munie d'un renfort fibreux formé par la préforme fibreuse, réunissant la texture fibreuse et la strate de filtration, et présentant un taux volumique de matrice élevé avec une répartition homogène de la matrice céramique réfractaire dans tout le renfort fibreux.

Une pièce en matériau composite CMC autre que Oxyde/Oxyde peut être obtenue de la même façon en réalisant la texture fibreuse et la strate de filtration avec des fibres de carbure de silicium et/ou de carbone et en utilisant une barbotine chargée de particules de carbure (par exemple de SiC), de borure (par exemple de TiB₂), de siliciure (par exemple MoSi₂) ou de nitrure (par exemple de Si₃N₄).

Le liquide chargé injecté dans la texture peut, en variante, comporter des particules d'un précurseur de céramique réfractaire, par exemple de type sol-gel ou polymérique. Dans ce cas, le traitement thermique comporte au moins une étape de transformation du précurseur de céramique réfractaire en un matériau céramique (étape dite de céramisation) suivi éventuellement d'une étape supplémentaire de frittage afin de densifier d'avantage la pièce en matériau composite.

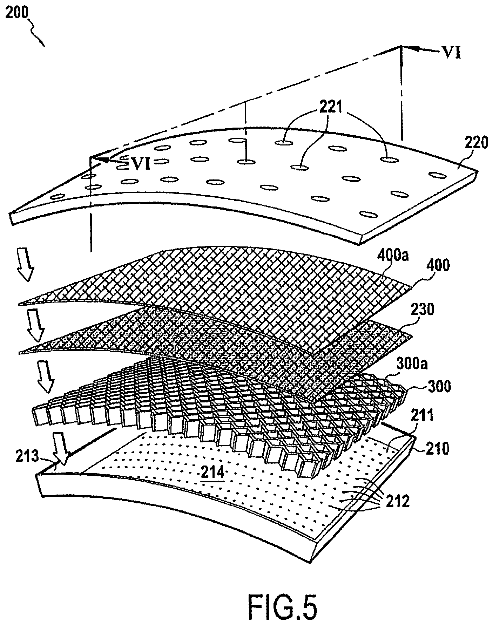

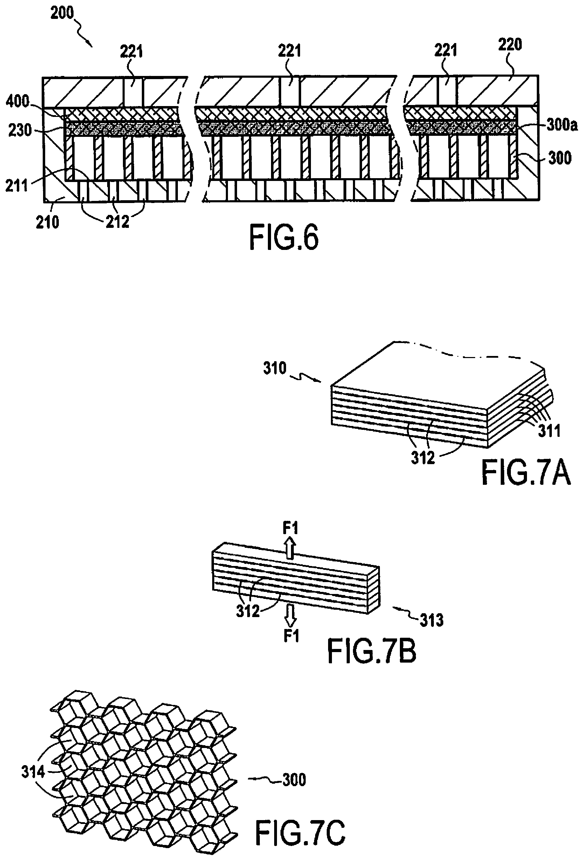

Les figures 5 à 9 illustrent un procédé de fabrication d'un module d'atténuation acoustique selon un mode de réalisation de l'invention. Comme illustrée sur les figures 5 et 6, on place dans un outillage 200 une structure alvéolaire 300 et une peau fibreuse 400 en regard de la face supérieure 300a de la structure alvéolaire. La structure alvéolaire 300 peut être notamment réalisée en matériau métallique ou en matériau composite ou en céramique monolithique. Dans le cas d'un matériau composite, le renfort fibreux de la structure alvéolaire peut être réalisé de différentes manières comme notamment celles décrites dans le document US 5 415 715. Il peut notamment être réalisé, comme illustré sur les figures 7A à 7C, en empilant et en liant en quinconce des strates de tissu 311, par exemple en fibre d'alumine de manière à former une ébauche 310. La liaison entre les strates 311 est réalisée le long de bandes 312 parallèles, les bandes 312 situées sur une face d'une strate étant décalées par rapport à celles situées sur l'autre face (figure 7A). Les bandes 312 de liaison entre les strates 311 peuvent être réalisées notamment par collage ou couture. L'empilement des strates est découpé en tronçons 313, perpendiculairement aux bandes de colle (figure 7B). Chaque tronçon est ensuite étiré en direction normale aux faces des strates (flèches f1 de la figure 7B) pour donner, par déformation, des structures alvéolaires 3100 avec ici des cellules hexagonales 314 (figure 7C).

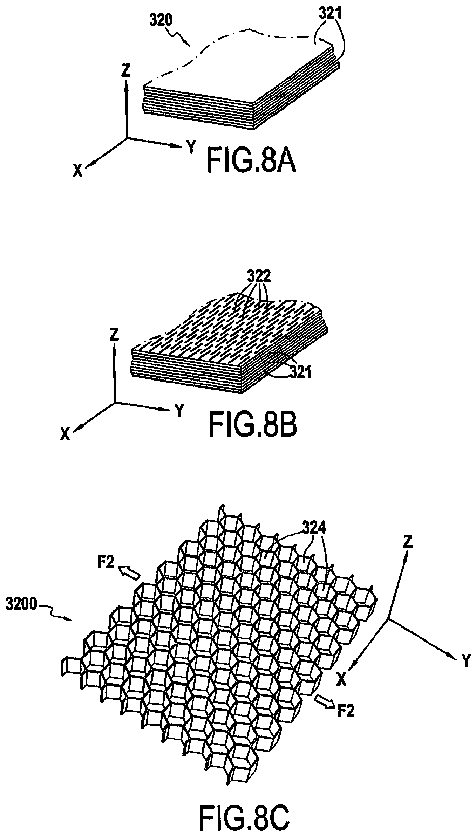

Selon une variante de réalisation illustrée sur les figures 8A à 8C, des strates bidimensionnelles 321, par exemple en fibres SiC, sont superposées et aiguilletées afin de former une ébauche 320 (figure 8A). Les strates 321 sont des couches par exemple de tissu ou de complexe formé de tissu et voile de fibres, le voile de fibres apportant des fibres pouvant être aisément prélevées par les aiguilles, lors de l'aiguilletage, pour être implantées à travers les strates. Comme le montre la figure 8B, des découpes 322 en forme de fentes sont réalisées en quinconce dans l'ébauche 320, par exemple au jet d'eau ou laser, leurs dimensions et localisations définissant les dimensions et formes des alvéoles. Après réalisation des découpes, l'ébauche 320 est étirée en direction perpendiculaire aux plans des découpes pour donner, par déformation, une structure alvéolaire 3200 avec ici des cellules hexagonales 324 (flèches f2 de la figure 8C).

Selon encore une autre variante de réalisation, la structure fibreuse destinée à former le renfort de la structure alvéolaire peut être réalisée en disposant des bandes de tissus dans le plan des parois des alvéoles et en liant ces bandes au niveau des jonctions entre les alvéoles.

Selon toujours une autre variante de réalisation, on réalise une structure fibreuse déployable par tissage tridimensionnel ou multicouche comme décrit dans le document US 9 631 519.

Une fois réalisé, le renfort fibreux de la structure alvéolaire est densifié. Dans l'exemple décrit ici, l'ébauche fibreuse destinée à former le renfort fibreux de la structure alvéolaire 300 est préalablement imprégnée avec une barbotine correspondant à une suspension d'une poudre d'alumine dans de l'eau. Une fois la phase liquide de la barbotine évacuée, l'ébauche est déployée afin de lui conférer une forme de structure alvéolaire. L'ébauche déployée est ensuite traitée thermiquement afin de la consolider et de former la structure alvéolaire 300 qui est autoporteuse.

Dans l'exemple décrit ici, la peau fibreuse 400 est réalisée par tissage 2D de fils d'alumine Nextel 610^{™}. La peau fibreuse 400 est ici destinée à former le renfort fibreux d'une peau de module acoustique en matériau composite Oxyde/Oxyde.

L'outillage 200 comprend un moule 210 et un contre-moule 120. Le moule 210 comprend un fond 211 muni d'une pluralité d'évents 212. Le moule 210 comprend également une paroi latérale 213 qui forme avec le fond 211 une cavité de moulage 214. Dans l'exemple illustré, l'outillage 200 dans lequel la peau fibreuse 400, une strate de filtration 230 et la structure alvéolaire 300 sont présentes est fermé dans sa partie inférieure par le moule 210 et est fermé dans sa partie supérieure par le contre-moule 220 formant un couvercle refermant l'outillage 200. Le moule 210 et le contre-moule 220 servent à dimensionner la préforme.

Le contre-moule 220 comporte une pluralité de ports d'injection 221 au travers desquels un liquide chargé de particules céramiques réfractaires est destiné à être injecté afin de pénétrer dans la porosité de la peau fibreuse 400 au travers de la première face 400a de la peau fibreuse 400. Dans l'exemple illustré aux figures 5 et 6, le liquide chargé est destiné à être injecté au travers d'une pluralité de ports d'injection 221 débouchant dans des zones différentes de la cavité de moulage.

Conformément à l'invention, une strate de filtration 230 est interposée entre la peau fibreuse 400 et la structure alvéolaire 300 qui repose sur le fond 211 du moule 210 comportant les évents 212. La strate de filtration selon l'invention correspond à une structure fibreuse obtenue par dépose unidirectionnelle (UD), ou tissage bidimensionnel (2D) ou tridimensionnel (3D) de fils de fibres céramiques réfractaires constituées d'au moins un des matériaux suivants: l'alumine, la mullite, la silice, un aluminosilicate, un borosilicate, du carbure de silicium, du carbone ou d'un mélange de plusieurs de ces matériaux. La strate de filtration est de préférence réalisée avec des fibres céramiques réfractaires de même nature que les fibres céramiques réfractaires de la peau fibreuse. La strate de filtration présente une épaisseur de préférence comprise entre 0,1 mm et 1 mm.

Dans l'exemple décrit ici, la strate de filtration 230 correspond à une couche de tissu 2D réalisée avec des fils de fibres d'alumine Nextel 610^{™}.

La strate de filtration selon l'invention est partiellement densifiée afin de former dans la strate un réseau de porosité d'une taille déterminée permettant de laisser passer le filtrat de la barbotine, à savoir la phase liquide de celle-ci, tout en retenant les particules de céramiques réfractaires présentes dans la barbotine injectée.

A titre d'exemple, la strate de filtration, une fois partiellement densifiée peut présenter une taille moyenne des pores comprise entre 0,1 µm et 20 µm avec un taux volumique moyen de porosité <50%.

La structure fibreuse destinée à former la strate de filtration peut être partiellement densifiée par plusieurs méthodes. La structure fibreuse peut être notamment pré-imprégnée ou infusée avec une barbotine chargée de particules réfractaires. Dans ce cas, le taux de densification et, par conséquent, le taux de porosité présent dans la strate de filtration après le pré-frittage des particules est ajusté en contrôlant la granulométrie, le taux de charge et le liant dans la barbotine. La strate de filtration peut en outre être obtenue en injectant une barbotine chargée de particules réfractaires dans la structure fibreuse, la quantité de particules initialement introduite pilotant l'épaisseur de calage et donc le taux volumique de matrice (Tvm) final. Les procédés d'enduction ou de trempé peuvent également être utilisés pour densifier partiellement la texture fibreuse destinée à former la strate de filtration.

Dans l'exemple décrit ici, la strate de filtration 230 réalisée à partir d'un tissu 2D de fils d'alumine qui a été infusée avec une barbotine chargée à 25% en volume de particules d'alumine, les particules ayant été pré-frittées afin de densifier partiellement la strate de filtration. La strate de filtration 230 permet le drainage du liquide à l'extérieur de la peau fibreuse 400 et son évacuation par les évents de sortie 212 du fait de l'application d'un gradient de pression entre les évents de sortie 212 et les ports d'injection 221, le liquide passant par les alvéoles de la structure alvéolaire 300 pour atteindre les évents de sortie 212.

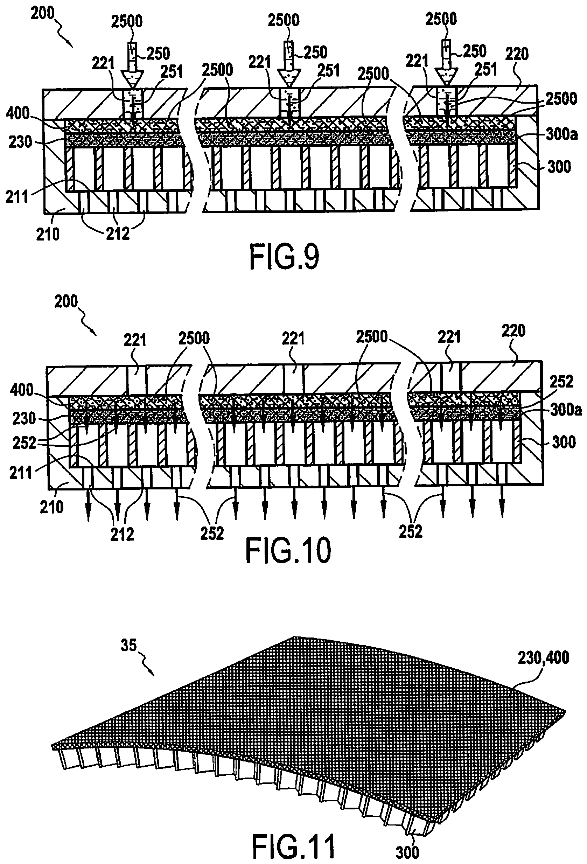

Dans l'exemple décrit ici, le liquide chargé correspond à une barbotine contenant des particules céramiques réfractaires. La figure 9 illustre la configuration obtenue durant l'injection d'une barbotine 250 et le drainage du milieu liquide de celle-ci. La barbotine 250 a été injectée sous pression par les ports d'injection 221 de manière à pénétrer dans la peau fibreuse 400 au travers de sa première face 400a. Les particules céramiques réfractaires 2500 présentes dans la barbotine 250 sont destinées à permettre la formation d'une matrice céramique réfractaire dans la porosité de la peau fibreuse 400. Cette matrice céramique réfractaire peut, dans un exemple de réalisation, être une matrice d'oxyde réfractaire.

La barbotine peut par exemple être une suspension d'une poudre d'alumine dans de l'eau. La dimension particulaire moyenne (D50) de la poudre d'alumine peut être comprise entre 0,1 µm et 2 µm. La poudre d'alumine utilisée peut être une poudre d'alumine alpha.

Plus généralement, la barbotine peut être une suspension comportant des particules céramiques réfractaires ou des particules d'un précurseur de céramique réfractaire présentant une dimension particulaire moyenne comprise entre 0,1 µm et 10 µm. La teneur volumique en particules dans la barbotine peut, avant l'injection, être comprise entre 20% et 50%. Les particules céramiques réfractaires peuvent comporter un matériau choisi parmi : l'alumine, la mullite, la silice, un aluminosilicate, un aluminophosphate, la zircone, un carbure, un borure et un nitrure ou un précurseur d'un ou plusieurs de ces matériaux. En fonction de leur composition de base, les particules céramiques réfractaires ou précurseur de céramique réfractaire peuvent, en outre, être mélangées avec des particules d'alumine, de zircone, d'aluminosilicate, d'un oxyde de terre rare, de silicate de terre rare (lequel peut par exemple être utilisé dans les barrières environnementales ou thermiques) ou toute autre charge permettant de fonctionnaliser la pièce en matériau composite à obtenir comme le noir de carbone, le graphite ou le carbure de silicium.

Le milieu liquide de la barbotine peut, par exemple, comporter une phase aqueuse présentant un pH acide (i.e. un pH inférieur à 7) et/ou une phase alcoolique comportant par exemple de l'éthanol. La barbotine peut comporter un acidifiant tel que de l'acide nitrique et le pH du milieu liquide peut par exemple être compris entre 1 et 5. La barbotine peut, en outre, comporter un liant organique comme de l'alcool polyvinylique (PVA) lequel est notamment soluble dans l'eau.

Comme illustré sur la figure 9, les particules céramiques réfractaires 2500 sont présentes après injection de la barbotine 250 dans la porosité de la peau fibreuse 400. Les flèches 251 représentent le mouvement de la barbotine 250 injectée dans la peau fibreuse 400. Les flèches 252 représentent quant à elles le mouvement du milieu ou phase liquide de la barbotine drainé par la strate de filtration 230 comme illustré sur la figure 10.

Un pompage peut, en outre, être réalisé au niveau des évents de sortie 212 durant le drainage, par exemple au moyen d'une pompe à vide primaire. La réalisation d'un tel pompage permet d'améliorer le drainage et de sécher plus rapidement la texture fibreuse.

Dans cette configuration, la strate de filtration 230 permet de retenir dans la peau fibreuse 400 les particules 2500 initialement présentes dans la barbotine et que tout ou partie de ces particules se déposent par filtration dans la peau fibreuse 400.

Une fois les étapes d'injection et de drainage effectuées, on obtient une préforme 35 comprenant la peau fibreuse 400 chargée de particules céramiques réfractaires ou de particules d'un précurseur de céramique réfractaire, la strate de filtration 230 et la structure alvéolaire 300, la strate de filtration 230 étant liée à la peau fibreuse 400 et la structure alvéolaire 300. L'adhésion entre la strate de filtration et la peau fibreuse est réalisée pendant l'injection. De la matière se dépose entre la strate de filtration et la peau fibreuse et, grâce à la compaction, l'ensemble est solidaire. Le traitement thermique de frittage crée ensuite des pontages entres les particules qui complète l'adhésion. La préforme obtenue est ensuite séchée puis démoulée, la préforme pouvant conserver après démoulage la forme adoptée dans la cavité de moulage.

La préforme est ensuite soumise à un traitement thermique, ici un pré-frittage, par exemple sous air à une température comprise entre 1000°C et 1200°C afin de ponter les particules céramiques réfractaires entre-elles et ainsi former une matrice céramique réfractaire dans la porosité de la texture fibreuse et la strate de filtration solidaire.

On obtient alors un module d'atténuation acoustique en matériau composite, par exemple une pièce en matériau composite Oxyde/Oxyde, munie d'un renfort fibreux formé par la préforme fibreuse, réunissant la texture fibreuse, la strate de filtration et la structure alvéolaire.

Une pièce en matériau composite CMC autre que Oxyde/Oxyde peut être obtenue de la même façon en réalisant la peau fibreuse, la strate de filtration et la structure alvéolaire avec des fibres de carbure de silicium et/ou de carbone et en utilisant une barbotine chargée de particules de carbure (par exemple de SiC), de borure (par exemple de TiB₂), de siliciure (par exemple MOSi₂) ou de nitrure (par exemple de Si₃N₄).

Le liquide chargé injecté dans la peau fibreuse peut, en variante, comporter des particules d'un précurseur de céramique réfractaire, par exemple de type sol-gel ou polymérique. Dans ce cas, le traitement thermique comporte au moins une étape de transformation du précurseur de céramique réfractaire en un matériau céramique (étape dite de céramisation) suivi éventuellement d'une étape supplémentaire de frittage afin de densifier d'avantage la pièce en matériau composite.

La fabrication du module d'atténuation acoustique peut en outre être complétée par la formation d'une seconde peau du côté de la face inférieure de la structure alvéolaire. A cet effet, on place le module d'atténuation acoustique dans un moule présentant une configuration similaire à l'outillage 200 décrit précédemment et en plaçant une peau fibreuse inférieure similaire à la peau fibreuse supérieure 400 déjà décrite en regard de la face inférieure de la structure alvéolaire, une strate de filtration similaire à la strate de filtration similaire à la strate de filtration 230 étant interposée entre la peau fibreuse et la structure alvéolaire. Dans ce cas, le moule utilisé diffère de l'outillage 200 en ce que la barbotine chargée est injectée du côté opposé, c'est-à-dire du côté où sont présents les évents 212 dans l'outillage 200 qui sont alors remplacés par des ports d'injection et en ce que la phase liquide de la barbotine est évacuée du côté de l'outillage où sont présents les ports d'injection 221 qui sont alors remplacés par des évents. En outre, afin de permette l'évacuation de la phase liquide de la barbotine ayant traversée la strate de filtration et la structure alvéolaire, des perforations sont réalisées dans la peau supérieure. Ces perforations peuvent être avantageusement utiles par la suite dans le fonctionnement du module d'atténuation acoustique. En effet, il est courant de réaliser des perforations dans une des peaux d'un tel module afin de faciliter le piégeage des ondes acoustiques dans les alvéoles de la structure alvéolaire.

Selon une variante de réalisation d'un module d'atténuation acoustique, on place dans un outillage de géométrie similaire à celle de l'outillage 200 décrit précédemment une peau fibreuse supérieure et une peau inférieure entre lesquelles est interposée une structure alvéolaire. Dans ce cas, la barbotine chargée est injectée simultanément dans les peaux fibreuses inférieure et supérieure et le drainage du solvant de la barbotine est réalisé sur les tranches de la ou les structures alvéolaires contre lesquelles une ou plusieurs strates de filtration sont placées.

Selon une autre variante de réalisation d'un module d'atténuation acoustique, on place dans un outillage similaire à l'outillage 200 décrit précédemment une peau fibreuse en regard d'une pluralité de structures alvéolaires adjacentes avec interposition d'une strate de filtration entre la peau fibreuse et la structure alvéolaire. La cavité de moulage peut présenter une forme droite ou courbée comme dans l'outillage 200. La cavité de moulage peut encore présenter une forme d'anneau complet ou de secteur d'anneau dans laquelle sont placées les structures alvéolaires, la peau fibreuse et la strate de filtration. Il est ainsi possible de former en une seule fois des modules d'atténuation acoustique aptes à être montés autour de dispositifs tels que notamment des moteurs aéronautiques.

Selon encore une autre variante de réalisation, la structure alvéolaire peut être remplacée par une structure aérée présentant par exemple une forme de tôle ondulée ou similaire.

Le procédé de l'invention peut en outre être avantageusement mis en œuvre pour la fabrication de pièces en matériau composite présentant des géométries complexes, en particulier des pièces présentant des formes semi-annulaires, annulaires et tronconiques. Le procédé de l'invention peut donc être utilisé pour fabriquer des pièces en matériau composite tels que des carters, chambres de combustion ou arrière-corps (« plugs ») de moteurs aéronautiques. Dans ce cas, l'outillage de moulage et d'injection de barbotine chargée est adapté à la forme de la pièce à réaliser, la texture fibreuse à injecter et la strate de filtration associée se conforme facilement à la géométrie du moule de l'outillage, ce qui est plus compliqué lorsqu'on utilise une pièce rigide en matériau poreux pour le drainage de la phase liquide de la barbotine.

## Revendications

1. Procédé de fabrication d'une pièce en matériau composite comprenant les étapes suivantes :
- formation d'une texture fibreuse (10) à partir de fibres céramiques réfractaires,
- placement de la texture fibreuse (10) dans un moule (110) comportant au moins un port d'injection (121) et au moins un port d'évacuation (112), une strate de filtration (130) étant interposée entre la texture fibreuse et ledit au moins port d'évacuation, la strate de filtration (130) comprenant une structure fibreuse partiellement densifiée,
- injection sous pression d'une barbotine (150) contenant une poudre de particules céramiques réfractaires (1500) dans la texture fibreuse (10),
- drainage par la strate de filtration (130) du solvant de la barbotine ayant traversé la texture fibreuse (10) et rétention de la poudre de particules céramiques réfractaires à l'intérieur de ladite texture par la strate de filtration (130) de manière à obtenir une préforme fibreuse comprenant au moins la texture fibreuse (10) chargée de particules céramiques réfractaires (1500) et la strate de filtration (130), le solvant étant évacué par ledit au moins port d'évacuation (112),
- traitement thermique des particules céramiques réfractaires (1500) présentes dans la texture fibreuse (10) de la préforme afin de former une pièce en matériau composite comprenant au moins ladite texture fibreuse densifiée par une matrice céramique réfractaire et la strate de filtration.

2. Procédé selon la revendication 1, dans lequel la strate de filtration (130) comprend des fibres céramiques réfractaires de même nature que les fibres céramiques réfractaires de la texture fibreuse (10) et dans lequel la strate de filtration est partiellement densifiée avec des particules céramiques réfractaires pré-frittées de même nature que les particules céramiques réfractaires (1500) déposées dans la texture fibreuse.

3. Procédé selon la revendication 1 ou 2, dans lequel la strate de filtration (130) présente une taille moyenne des pores comprise entre 0,1 µm et 20 µm avec un taux volumique moyen de porosité inférieur à 50%.

4. Procédé selon l'une quelconque des revendications 1 à 3, dans lequel la texture fibreuse (10) comprend une structure fibreuse obtenue par tissage bidimensionnel, ou tissage tridimensionnel ou multicouche, ou placement automatique de fibres unidirectionnelles.

5. Procédé selon l'une quelconque des revendications 1 à 3, dans lequel la texture fibreuse correspond à une peau fibreuse (400) placée en regard d'une face (300a) d'une structure alvéolaire (300), la peau fibreuse et la structure alvéolaire étant placées dans le moule (210) avec interposition de la strate de filtration (230) entre ladite peau fibreuse et ladite structure alvéolaire, la pièce en matériau composite obtenue comprenant la peau fibreuse densifiée par une matrice céramique réfractaire, la strate de filtration et la structure alvéolaire.

6. Procédé selon l'une quelconque des revendications 1 à 3, dans lequel la texture fibreuse correspond à une peau fibreuse placée en regard des faces d'une pluralité de structures alvéolaires, la peau fibreuse et les structures alvéolaires étant placées dans le moule avec interposition de la strate de filtration entre ladite peau fibreuse et lesdites structures alvéolaires, la pièce en matériau composite obtenue comprenant la peau fibreuse densifiée par une matrice céramique réfractaire, la strate de filtration et les structures alvéolaires.

7. Procédé selon l'une quelconque des revendications 1 à 3, dans lequel le moule présente une géométrie de révolution annulaire ou tronconique, la texture fibreuse et la strate de filtration étant conformées suivant une géométrie de révolution annulaire ou tronconique lors de leur placement dans le moule.

8. Procédé selon l'une quelconque des revendications 1 à 7, **caractérisée en ce que** les fils de la texture fibreuse sont formés de fibres constituées d'un ou plusieurs des matériaux suivants : l'alumine, la mullite, la silice, un aluminosilicate, un borosilicate, du carbure de silicium et du carbone.

9. Procédé selon l'une quelconque des revendications 1 à 8, **caractérisé en ce que** les particules céramiques réfractaires sont en un matériau choisi parmi : l'alumine, la mullite, la silice, un aluminosilicate, un aluminophosphate, la zircone, un carbure, un borure, un siliciure et un nitrure ou un mélange de plusieurs de ces matériaux.

10. Pièce en matériau composite obtenue conformément au procédé selon l'une quelconque des revendications 1 à 9, **caractérisée en ce qu'**elle constitue une pièce d'arrière-corps, une chambre de combustion ou un carter de moteur aéronautique.

## Patentansprüche

1. Verfahren zur Herstellung eines Teils aus Verbundwerkstoff, das die folgenden Schritte umfasst:
- Bilden einer Fasertextur (10) ausgehend von feuerfesten Keramikfasern,
- Platzieren der Fasertextur (10) in einer Form (110), die mindestens eine Einspritzöffnung (121) und mindestens eine Ablassöffnung (112) umfasst, wobei eine Filterschicht (130) zwischen der Fasertextur und der mindestens einen Ablassöffnung zwischengelegt ist, wobei die Filterschicht (130) eine teilweise verdichtete Faserstruktur umfasst,
- Einspritzen unter Druck eines Schlickers (150), der ein Pulver aus feuerfesten Keramikpartikeln (1500) umfasst, in die Fasertextur (10),
- Abführen des Lösungsmittels des Schlickers, das die Fasertextur (10) durchquert hat, durch die Filterschicht (130) und Rückhalten des Pulvers aus feuerfesten Keramikpartikeln im Inneren der Textur durch die Filterschicht (130), derart dass eine Faservorform erhalten wird, die mindestens die mit feuerfesten Keramikpartikeln (1500) gefüllte Fasertextur (10) und die Filterschicht (130) umfasst, wobei das Lösungsmittel durch die mindestens eine Ablassöffnung (112) abgeführt wird,
- Wärmebehandlung der feuerfesten Keramikpartikel (1500), die in der Fasertextur (10) der Vorform vorhanden sind, um ein Teil aus Verbundwerkstoff zu bilden, das mindestens die durch eine feuerfeste Keramikmatrix verdichtete Fasertextur und die Filterschicht umfasst.

2. Verfahren nach Anspruch 1, wobei die Filterschicht (130) die feuerfesten Keramikfasern mit der gleichen Beschaffenheit wie die feuerfesten Keramikfasern der Fasertextur (10) umfasst und wobei die Filterschicht teilweise mit den vorgesinterten feuerfesten Keramikpartikeln mit der gleichen Beschaffenheit wie die in der Fasertextur abgelagerten feuerfesten Keramikpartikel (1500) verdichtet wird.

3. Verfahren nach Anspruch 1 oder 2, wobei die Filterschicht (130) eine mittlere Porengröße von zwischen 0,1 µm und 20 µm mit einem mittleren Porositätsvolumenanteil von kleiner als 50% aufweist.

4. Verfahren nach einem der Ansprüche 1 bis 3, wobei die Fasertextur (10) eine Faserstruktur umfasst, die durch zweidimensionales Weben oder dreidimensionales oder mehrschichtiges Weben oder automatisches Platzieren von unidirektionalen Fasern erhalten wird.

5. Verfahren nach einem der Ansprüche 1 bis 3, wobei die Fasertextur einer Faserhaut (400) entspricht, die einer Seite (300a) einer Wabenstruktur (300) gegenüberstehend platziert wird, wobei die Faserhaut und die Wabenstruktur in der Form (210) mit Zwischenlegung der Filterschicht (230) zwischen der Faserhaut und der Wabenstruktur platziert werden, wobei das erhaltene Teil aus Verbundwerkstoff die durch eine feuerfeste Keramikmatrix verdichtete Faserhaut, die Filterschicht und die Wabenstruktur umfasst.

6. Verfahren nach einem der Ansprüche 1 bis 3, wobei die Fasertextur einer Faserhaut entspricht, die den Seiten einer Vielzahl von Wabenstrukturen gegenüberstehend platziert wird, wobei die Faserhaut und die Wabenstrukturen in der Form mit Zwischenlegung der Filterschicht zwischen der Faserhaut und den Wabenstrukturen platziert werden, wobei das erhaltene Teil aus Verbundwerkstoff die durch eine feuerfeste Keramikmatrix verdichtete Faserhaut, die Filterschicht und die Wabenstrukturen umfasst.

7. Verfahren nach einem der Ansprüche 1 bis 3, wobei die Form eine ringförmige oder kegelstumpfartige Umlaufgeometrie aufweist, wobei die Fasertextur und die Filterschicht bei ihrer Platzierung in der Form gemäß einer ringförmigen oder kegelstumpfartigen Umlaufgeometrie angepasst werden.

8. Verfahren nach einem der Ansprüche 1 bis 7, **dadurch gekennzeichnet, dass** die Fäden der Fasertextur aus Fasern gebildet werden, die aus einem oder mehreren der folgenden Werkstoffe gebildet werden: Aluminiumoxid, Mullit, Siliziumdioxid, einem Aluminosilikat, einem Borsilikat, Siliziumkarbid und Kohlenstoff.

9. Verfahren nach einem der Ansprüche 1 bis 8, **dadurch gekennzeichnet, dass** die feuerfesten Keramikpartikel aus einem Werkstoff bestehen, der ausgewählt wird aus: Aluminiumoxid, Mullit, Siliziumdioxid, einem Aluminosilikat, einem Aluminiumphosphat, Zirkonium, einem Karbid, einem Borid, einem Silicid und einem Nitrid oder einem Gemisch aus mehreren dieser Werkstoffe.

10. Teil aus Verbundwerkstoff, das nach einem Verfahren nach einem der Ansprüche 1 bis 9 erhalten wird, **dadurch gekennzeichnet, dass** es ein Heckteil, eine Brennkammer oder ein Gehäuse eines Flugtriebwerks bildet.

## Claims

1. A process for manufacturing a composite material part comprising the following steps:
- formation of a fibrous texture (10) from refractory ceramic fibres,
- placement of the fibrous texture (10) in a mould (110) having at least one injection port (121) and at least one evacuation port (112), a filtration layer (130) being interposed between the fibrous texture and said at least one evacuation port, the filtration layer (130) comprising a partially densified fibrous structure,
- pressure injection of a slurry (150) containing a powder of refractory ceramic particles (1500) into the fibrous texture (10),
- drainage by the filtration layer (130) of the solvent of the slurry having passed through the fibrous texture (10) and retention of the powder of refractory ceramic particles within said texture by the filtration layer (130) so as to obtain a fibrous preform comprising at least the fibrous texture (10) filled with refractory ceramic particles (1500) and the filtration layer (130), the solvent being discharged through said at least one discharge port (112),
- heat treatment of the refractory ceramic particles (1500) present in the fibrous texture (10) of the preform in order to form a composite material part comprising at least said fibrous texture densified by a refractory ceramic matrix and the filtration layer.

2. The process as claimed in claim 1, wherein the filtration layer (130) comprises refractory ceramic fibres of the same nature as the refractory ceramic fibres of the fibrous texture (10) and wherein the filtration layer is partially densified with pre-sintered refractory ceramic particles of the same nature as the refractory ceramic particles (1500) deposited in the fibrous texture.

3. The process as claimed in claim 1 or 2, wherein the filtration layer (130) has an average pore size of between 0.1 µm and 20 µm with a volume-average porosity of less than 50%.

4. The process as claimed in any one of claims 1 to 3, wherein the fibre texture (10) comprises a fibre structure obtained by two-dimensional weaving, or three-dimensional or multi-layer weaving, or automatic placement of unidirectional fibres.

5. The process as claimed in any one of claims 1 to 3, wherein the fibrous texture corresponds to a fibrous skin (400) placed opposite one face (300a) of a cellular structure (300), the fibrous skin and the cellular structure being placed in the mould (210) with interposition of the filtration layer (230) between said fibrous skin and said cellular structure, the composite material part obtained comprising the fibrous skin densified by a refractory ceramic matrix, the filtration layer and the cellular structure.

6. The process as claimed in any one of claims 1 to 3, wherein the fibrous texture corresponds to a fibrous skin placed opposite the faces of a plurality of alveolar structures, the fibrous skin and the alveolar structures being placed in the mould with interposition of the filtration layer between said fibrous skin and said alveolar structures, the composite material part obtained comprising the fibrous skin densified by a refractory ceramic matrix, the filtration layer and the alveolar structures.

7. The process as claimed in any one of claims 1 to 3, wherein the mould has an annular or frustoconical geometry of revolution, the fibrous texture and the filtration layer being shaped into an annular or frustoconical geometry of revolution when placed in the mould.

8. The process as claimed in any one of claims 1 to 7, **characterized in that** the yarns of the fibrous texture are formed of fibres consisting of one or more of the following materials: alumina, mullite, silica, an aluminosilicate, a borosilicate, silicon carbide and carbon.

9. The process as claimed in any one of claims 1 to 8, **characterised in that** the refractory ceramic particles are of a material selected from: alumina, mullite, silica, an aluminosilicate, an aluminophosphate, zirconia, a carbide, a boride, a silicide and a nitride or a mixture of several of these materials.

10. A composite material part obtained in accordance with the process as claimed in any one of claims 1 to 9, **characterized in that** it constitutes a rear body part, a combustion chamber or a crankcase of an aircraft engine.
